(19) Europäisches Patentamt
European Patent Office
Office européen des brevets

(11) Veröffentlichungsnummer: **0 535 495 A1**

(12) # EUROPÄISCHE PATENTANMELDUNG

(21) Anmeldenummer: **92116116.2**

(51) Int. Cl.[5]: **C09B 62/51**

(22) Anmeldetag: **21.09.92**

(30) Priorität: **28.09.91 DE 4132444**

(43) Veröffentlichungstag der Anmeldung:
**07.04.93 Patentblatt 93/14**

(84) Benannte Vertragsstaaten:
**BE CH DE ES FR GB IT LI NL**

(71) Anmelder: **HOECHST AKTIENGESELLSCHAFT**
**Postfach 80 03 20**
**W-6230 Frankfurt am Main 80(DE)**

(72) Erfinder: **Schläfer, Ludwig, Dr.**
**Königsbergerstrasse 40**
**W-6233 Kelkheim/Ts(DE)**
Erfinder: **Russ, Werner Hubert, Dr.**
**Wingertstrasse 8a**
**W-6093 Flörsheim/M(DE)**

(54) **Wasserlösliche Azoverbindungen, Verfahren zu deren Herstellung und ihre Verwendung als Farbstoffe.**

(57) Es werden Monoazoverbindungen beschrieben, die faserreaktive Eigenschaften besitzen und hydroxy- und/oder carbonamidgruppenhaltige Materialien, insbesondere Fasermaterialien, wie beispielsweise Cellulosefasermaterialien und Wolle, in farbstarken echten Tönen färben und insbesondere auch für den Reserve- und Ätzdruck eingesetzt werden können. Sie entsprechen der allgemeinen Formel (1)

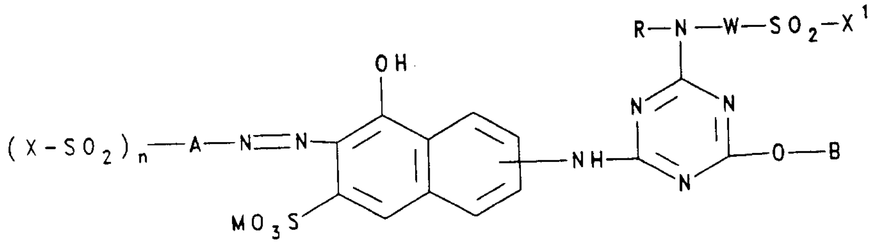

(1)

in welcher bedeuten:
A ist gegebenenfalls substituiertes Phenylen oder gegebenenfalls sulfosubstituiertes Naphthylen, die Gruppen $-X-SO_2-$ und $-SO_2-X^1$ stellen faserreaktive Gruppen der Vinylsulfonreihe dar, n ist die Zahl 1 oder 2, M ist Wasserstoff oder ein Alkalimetall, R ist Wasserstoff oder niederes Alkyl, W ist Phenylen oder niederes Alkylen, B ist niederes Alkyl und die Triazinylaminogruppe ist in 2- oder 3-Stellung an den 6-Sulfo-8-naphthol-Rest gebunden.

EP 0 535 495 A1

Die Erfindung liegt auf dem technischen Gebiet der faserreaktiven Azofarbstoffe.

Einzelne Azofarbstoffe mit einer Aminonaphthol-sulfonsäure-Kupplungskomponente, die eine faserreaktive Gruppe der Vinylsulfonreihe besitzen und darüber hinaus einen alkoxysubstituierten s-Triazin-Rest enthalten, sind aus den veröffentlichten, geprüften japanischen Patentanmeldungen mit den Veröffentlichungs-Nrs. Sho-45-10789 und Sho-55-39672 sowie aus den Europäischen Patentanmeldungs-Veröffentlichungen Nrs. 0 174 275A und 0 384 372A bekannt.

Mit der vorliegenden Erfindung wurden nunmehr neue, wertvolle faserreaktive Monoazoverbindungen mit guten bis sehr guten Naßechtheitseigenschaften der mit ihnen erhältlichen Färbungen gefunden, die sich sehr gut für den Ätz- und Reservedruck eignen und somit in breiterem Anwendungsumfang zum Färben von Fasermaterialien einsetzen lassen. Beim Ätzdruck wird auf eine gefärbte Stoffbahn (Fond) in einem gewünschten Muster ein Ätzmittel aufgedruckt; das Ätzmittel zerstört den Farbstoff, sofern dieser ätzbar ist, so daß nach Fertigstellung des Ätzverfahrens ein weißes Muster auf der Färbung erscheint (Weißätze). Enthält die aufgedruckte Ätze zusätzlich einen ätzestabilen Farbstoff, so erhält man nach Fertigstellung des Ätzvorgangs und üblicher Behandlung zur Fixierung dieses beigegebenen Farbstoffes auf dem Fond ein Druckmuster in einem anderen Farbton (Buntätze). Bei dem Reservedruck wird zunächst das Gewebe mit einem geeigneten Reservierungsmittel in einem gewünschten Muster bedruckt. Das so vorbedruckte Gewebe wird anschließend mit einem Farbstoff, der sich mit dem Reservierungsmittel zu verbinden vermag und somit nicht mehr in der Lage ist, auf dem Gewebe zu fixieren, überfärbt (überklotzt oder überdruckt) mit der Folge, daß an den reservierten Stellen keine Farbstoffixierung eintritt und somit die erhaltene Färbung ein weißes Muster gemäß dem Muster des Reservierungsmittels besitzt.

Die neuen, erfindungsgemäßen Monoazoverbindungen besitzen die allgemeinen Formel (1)

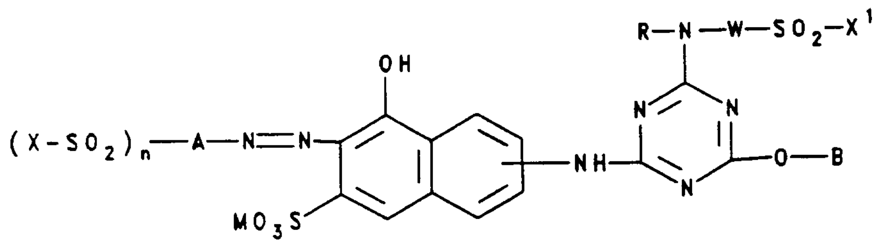

(1)

in welcher bedeuten:

- A ist Phenylen, das durch 1 oder 2 Substituenten substituiert sein kann, wie beispielsweise Substituenten aus der Gruppe Halogen, wie Brom und insbesondere Chlor, Alkyl von 1 bis 4 C-Atomen, wie Ethyl und insbesondere Methyl, Alkoxy von 1 bis 4 C-Atomen, wie Ethoxy und insbesondere Methoxy, Sulfo und Carboxy, wobei der Phenylenrest bevorzugt der meta- oder para-Phenylenrest ist, oder ist ein Naphthylen, an das die Azogruppe bevorzugt in 2-Stellung gebunden ist, das durch ein Sulfo substituiert sein kann;
- X ist Vinyl oder ist Ethyl, das durch einen Substituenten substituiert ist, der durch Alkali unter Bildung der Vinylgruppe eliminierbar ist, bevorzugt hiervon $\beta$-Sulfatoethyl;
- n ist die Zahl 1 oder 2, bevorzugt 1;
- M ist Wasserstoff oder ein Alkalimetall, wie Natrium, Kalium oder Lithium;
- R ist Wasserstoff oder Alkyl von 1 bis 4 C-Atomen, wie Ethyl und insbesondere Methyl, insbesondere bevorzugt Wasserstoff;
- W ist Phenylen oder Alkylen von 2 bis 4 C-Atomen, bevorzugt hiervon 1,3-Phenylen, 1,4-Phenylen, 1,2-Ethylen und 1,3-Propylen;
- $X^1$ ist Vinyl oder ist Ethyl, das in $\beta$-Stellung durch einen Substituenten substituiert ist, der durch Alkali unter Bildung der Vinylgruppe eliminierbar ist, wie hiervon bevorzugt $\beta$-Chlorethyl oder $\beta$-Sulfatoethyl, und ist bevorzugt Vinyl oder $\beta$-Sulfatoethyl;
- B ist Alkyl von 1 bis 4 C-Atomen, wie Ethyl und insbesondere Methyl;

die Triazinylaminogruppe ist in 2- oder 3-Stellung an den 6-Sulfo-8-naphthol-Rest gebunden.

Weiterhin bevorzugt sind hiervon Verbindungen, in welchen A einen Rest der allgemeinen Formel (2a) oder (2b)

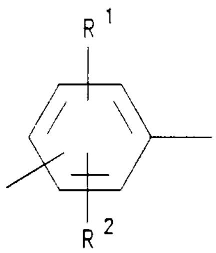

(2a)

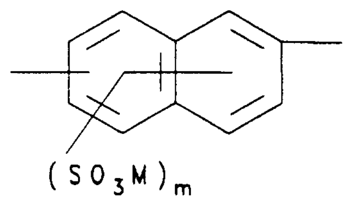

(2b)

ist, worin bedeuten:

- $R^1$ ist Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Carboxy, Chlor oder Sulfo, bevorzugt Wasserstoff oder Methoxy;
- $R^2$ ist Wasserstoff, Alkyl von 1 bis 4 C-Atomen, wie Ethyl und insbesondere Methyl, Alkoxy von 1 bis 4 C-Atomen, wie Ethoxy und insbesondere Methoxy oder Chlor, bevorzugt Wasserstoff oder Methoxy;
- m ist die Zahl Null oder 1, wobei im Falle von m gleich 1 die Gruppe $SO_3M$ bevorzugt in 1-, 6- oder 8-Stellung gebunden ist (im Falle von m gleich Null stellt diese Gruppierung ein Wasserstoffatom dar);

die Gruppe $X\text{-}SO_2\text{-}$ steht im Formelrest (2b) bevorzugt in 6- oder 8-Stellung des in 2-Stellung mit der Azogruppe verbundenen Naphthylrestes.

β-Ständige, alkalisch eliminierbare Substituenten in der Ethylgruppe von X und $X^1$ sind beispielsweise Alkanoyloxy von 2 bis 5 C-Atomen, wie Acetyloxy, Benzoyloxy, Sulfobenzoyloxy, Toluolsulfonyloxy, Halogen, wie Brom und insbesondere Chlor, Dimethylamino, Diethylamino, Phosphato, Thiosulfato und Sulfato.

Die Gruppen "Sulfo", "Carboxy", "Phosphato", "Thiosulfato" und "Sulfato" schließen sowohl deren Säureform als auch deren Salzform ein. Demgemäß bedeuten Sulfogruppen Gruppen entsprechend der allgemeinen Formel $-SO_3M$ , Carboxygruppen Gruppen entsprechend der allgemeinen Formel -COOM , Phosphatogruppen Gruppen entsprechend der allgemeinen Formel $-OPO_3M_2$ , Thiosulfatogruppen Gruppen entsprechend der allgemeinen Formel $-S\text{-}SO_3M$ und Sulfatogruppen Gruppen entsprechend der allgemeinen Formel $-OSO_3M$ , jeweils mit M der obengenannten Bedeutung.

Reste der allgemeinen Formel $(X\text{-}SO_2)_n\text{-}A\text{-}$ in den Verbindungen der allgemeinen Formel (1) sind beispielsweise 4-(β-Sulfatoethylsulfonyl)-phenyl, 4-Vinylsulfonylphenyl, 3-(β-Sulfatoethylsulfonyl)-phenyl, 2,4-Bis-(β-sulfatoethylsulfonyl)-phenyl, 2,5-Bis-(β-sulfatoethylsulfonyl)-phenyl, 3,4-Bis-(β-sulfatoethylsulfonyl)-phenyl, 3,5-Bis-(β-sulfatoethylsulfonyl)-phenyl, 2-Methoxy-5-(β-sulfatoethylsulfonyl)-phenyl, 4-Methoxy-3-(β-sulfatoethylsulfonyl)-phenyl, 2-Methoxy-4-(β-sulfatoethylsulfonyl)-phenyl, 2-Methoxy-5-methyl-4-(β-sulfatoethylsulfonyl)-phenyl, 2,5-Dimethoxy-4-(β-sulfatoethylsulfonyl)-phenyl, 6-(β-Sulfatoethylsulfonyl)-naphth-2-yl, 8-(β-Sulfatoethylsulfonyl)-naphth-2-yl, 6-Sulfo-8-(β-sulfatoethylsulfonyl)-naphth-2-yl, 8-Sulfo-6-(β-sulfatoethylsulfonyl)-naphth-2-yl und 1-Sulfo-6-(β-sulfatoethylsulfonyl)-2-naphth-yl.

Reste der Formel $-W\text{-}SO_2\text{-}X^1$ in den Verbindungen der allgemeinen Formel (1) sind beispielsweise 4-(β-Sulfatoethylsulfonyl)-phenyl, 3-(β-Sulfatoethylsulfonyl)-phenyl, 4-Vinylsulfonyl-phenyl, 3-Vinylsulfonyl-phenyl, 2-(β-Sulfatoethylsulfonyl)-ethyl, 2-(β-Chlorethylsulfonyl)-ethyl, 2-(Vinylsulfonyl)-ethyl, 3-(Vinylsulfonyl)-propyl, 3-(β-Chlorethylsulfonyl)-propyl, 3-(β-Sulfatoethylsulfonyl)-propyl, 4-(β-Sulfatoethylsulfonyl)-butyl, 4-(β-Chlorethylsulfonyl)-butyl und 4-(Vinylsulfonyl)-butyl.

Die vorliegende Erfindung betrifft weiterhin Verfahren zur Herstellung der erfindungsgemäßen Azoverbindungen der allgemeinen Formel (1), die dadurch gekennzeichnet sind, daß man eine Diazoniumsalzverbindung eines aromatischen Amins der allgemeinen Formel (3)

$$(X - SO_2)_n - A - NH_2 \qquad (3)$$

in welcher X, n und A eine der obengenannten Bedeutungen haben, mit einer Verbindung der allgemeinen Formel (4)

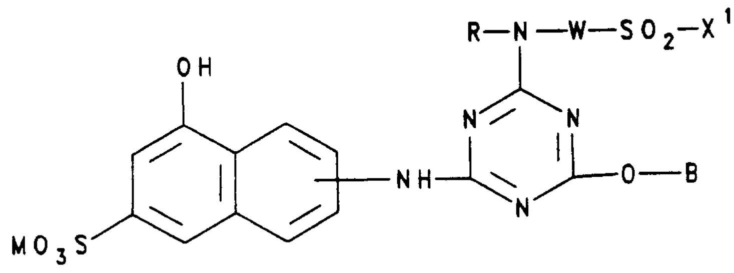

(4)

in welcher M, B, R, W und $X^1$ die obengenannten Bedeutungen haben und die Triazinylaminogruppe in 2- oder 3-Stellung an den 8-Naphthol-Rest gebunden ist, kuppelt,
oder daß man eine Verbindung der allgemeinen Formel (5)

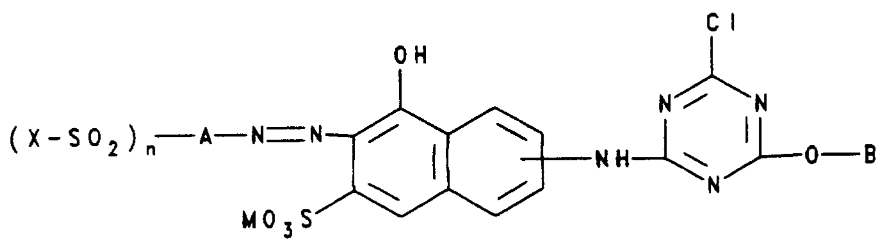

(5)

in welcher X, n, A, M und B eine der obengenannten Bedeutungen haben und die Triazinylaminogruppe in 2- oder 3-Stellung an den 8-Naphthol-Rest gebunden ist, mit einer Aminoverbindung der allgemeinen Formel (6)

$$\begin{array}{c} R \\ | \\ H-N-W-SO_2-X^1 \end{array} \qquad (6)$$

in welcher R, W und $X^1$ eine der obengenannten Bedeutungen haben, umsetzt.

Die Verbindungen der allgemeinen Formel (3) sind in der Literatur zahlreich beschrieben, desgleichen auch deren Überführung in Diazoniumverbindungen nach den üblichen Diazotierungsreaktionen, so bspw. bei -5°C bis + 15°C mittels salpetriger Säure bei einem pH-Wert von unterhalb 2,5. Die Kupplungsreaktion erfolgt bevorzugt in wäßriger Lösung analog bekannten Verfahrensweisen, so beispielsweise bei einem pH-Wert zwischen 3 und 8, vorzugsweise zwischen 4 und 7, und bei einer Temperatur zwischen 0 und 40°C, vorzugsweise zwischen 10 und 25°C.

Ebenso wird die Umsetzung der Chlortriazinylaminoverbindung der allgemeinen Formel (5) mit der Aminoverbindung der allgemeinen Formel (6) nach altbekannten Verfahren der Umsetzung eines Chlortriazins mit einer Aminoverbindung durchgeführt, so beispielsweise in wäßrigem oder wäßrig-organischem Medium, bevorzugt in wäßriger Lösung, bei einem pH-Wert zwischen 1 und 9, bevorzugt zwischen 3 und 4,5, und bei einer Temperatur zwischen 0 und 90°C, bevorzugt zwischen 20 und 70°C. Sofern die Umsetzung in einem wäßrig-organischen Medium durchgeführt wird, wobei das organische Medium ein gegenüber den Reaktanten inertes und bevorzugt mit Wasser mischbares Lösemittel ist, ist das organische Lösemittel bspw. Toluol oder bevorzugt Aceton oder N-Methylpyrrolidon.

Die 2,4-Dichlor-4-alkoxy-s-triazin-Verbindung, die zur Herstellung der Ausgangsverbindungen (4) und (5) dienen kann, und deren Herstellung sind aus der russischen Patentschrift Nr. 295 786 bekannt.

Ausgangsverbindungen der allgemeinen Formel (3) sind beispielsweise 4-(β-Sulfatoethylsulfonyl)-anilin, 4-Vinylsulfonyl-anilin, 3-(β-Sulfatoethylsulfonyl)-anilin, 2,4-Bis-(β-sulfatoethylsulfonyl)-anilin, 2,5-Bis-(β-sulfatoethylsulfonyl)-anilin, 3,4-Bis-(β-sulfatoethylsulfonyl)-anilin, 3,5-Bis-(β-sulfatoethylsulfonyl)-anilin, 2-Methoxy-5-(β-sulfatoethylsulfonyl)-anilin, 4-Methoxy-3-(β-sulfatoethylsulfonyl)-anilin, 2-Methoxy-4-(β-sulfatoethylsulfonyl)-anilin, 2-Methoxy-5-methyl-4-(β-sulfatoethylsulfonyl)-anilin, 6-(β-Sulfatoethylsulfonyl)-2-amino-naphthalin, 8-(β-Sulfatoethylsulfonyl)-2-aminonaphthalin, 6-Sulfo-8-(β-sulfatoethylsulfonyl)-2-amino-naphthalin, 8-Sulfo-6-(β-sulfatoethylsulfonyl)-2-amino-naphthalin und 1-Sulfo-6-(β-sulfatoethylsulfonyl)-2-amino-naphthalin.

Aminoverbindungen der allgemeinen Formel $HN(R)-W-SO_2-X^1$ sind beispielsweise 4-(β-Sulfatoethylsulfonyl)-anilin, 3-(β-Sulfatoethylsulfonyl)-anilin, N-Methyl-4-(β-sulfatoethylsulfonyl)-anilin, N-Methyl-3-(β-sulfatoethylsulfonyl)-anilin, N-Methyl-3-vinylsulfonyl-anilin, N-Methyl-4-vinylsulfonyl-anilin, 4-Vinylsulfonyl-anilin, 3-Vinylsulfonyl-anilin, 2-(β-Sulfatoethylsulfonyl)-1-amino-ethan, 2-(β-Chlorethylsulfonyl)-1-amino-ethan, 2-Vinylsulfonyl-1-amino-ethan, 3-Vinylsulfonyl-1-amino-propan, 3-(β-Chlorethylsulfonyl)-1-amino-propan, 3-(β-Sulfatoethylsulfonyl)-1-amino-propan, 4-(β-Sulfatoethylsulfonyl)-1-amino-butan, 4-(β-Chlorethylsulfonyl)-1-amino-butan und 4-Vinylsulfonyl-1-amino-butan.

Die Abscheidung der erfindungsgemäß hergestellten Verbindungen aus den Syntheseansätzen erfolgt nach allgemein bekannten Methoden, so beispielsweise durch Ausfällen aus dem Reaktionsmedium mittels eines Elektrolyten, wie beispielsweise Natriumchlorid und Kaliumchlorid, oder durch Eindampfen oder Sprühtrocknung der Reaktionslösung, wobei der Reaktionslösung eine Puffersubstanz zugefügt werden kann. Die neuen erfindungsgemäßen Azoverbindungen der allgemeinen Formel (1) - im nachfolgenden Verbindungen (1) genannt - haben faserreaktive Eigenschaften und besitzen sehr gute Farbstoffeigenschaften. Sie können deshalb zum Färben von hydroxy- und/oder carbonamidgruppenhaltigem Material, insbesondere Fasermaterial, wie auch von Leder, verwendet werden. Ebenso können die bei der Synthese der Verbindungen (1) anfallenden Lösungen, gegebenenfalls nach Zusatz einer üblichen Puffersubstanz, die einen pH-Wert zwischen 3 und 7 einzuhalten vermag, und gegebenenfalls nach Konzentrierung der Lösung, direkt als Flüssigpräparation der färberischen Verwendung zugeführt werden.

Gegenstand der vorliegenden Erfindung ist deshalb auch die Verwendung der erfindungsgemäßen Verbindungen (1) zum Färben (einschließlich Bedrucken) von hydroxy- und/oder carbonamidgruppenhaltigen Materialien, insbesondere Fasermaterialien, bzw. Verfahren zu deren Anwendung auf diesen Substraten. Hierbei kann man analog bekannten Verfahrensweisen vorgehen.

Hydroxygrupppenhaltige Materialien sind solche natürlichen oder synthetischen Ursprungs, wie beispielsweise Cellulosefasern oder deren Regeneratprodukte und Polyvinylalkohole oder cellulosehaltige Produkte, wie Papier. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische und natürliche Polyamide und Polyurethane sowohl in Form der Masse, wie bspw. Folien, als auch in Form von Fasern, beispielsweise Wolle und andere Tierhaare, Seide, Leder, Polyamid-6,6, Polyamid-6, Polyamid-11 und Polyamid-4.

Die Verbindungen (1) lassen sich, gemäß der erfindungsgemäßen Anwendung, auf den genannten Substraten nach den für wasserlösliche Farbstoffe, insbesondere faserreaktive Farbstoffe, bekannten Anwendungstechniken applizieren und fixieren, so beispielsweise, indem man die Verbindung (1) in gelöster Form auf das Substrat aufbringt oder sie darin einbringt und sie auf diesem oder in diesem, gegebenenfalls durch Hitzeeinwirkung oder durch Einwirkung eines alkalisch wirkenden Mittels oder durch beide Maßnahmen, fixiert. Solche Färbe- und Fixierweisen sind sowohl in der Fachliteratur als auch in der Patentliteratur zahlreich beschrieben, wie beispielsweise in der Europäischen Patentanmeldungs-Veröffentlichung Nr. 0 218 131.

Die erfindungsgemäßen Verbindungen (1) besitzen eine gute bis sehr gute Löslichkeit in Wasser und eine gute Stabilität in den Druckpasten und Färbebädern. Sie zeichnen sich durch hohe Farbstärke und guten Farbaufbau aus und liefern mit sehr hohen Fixierausbeuten farbstarke, rote Färbungen und Drucke, die sich durch gute Gebrauchs- und Fabrikationsechtheiten, wie beispielsweise Wasch-, Meerwasser-, Wasser-, Chlorbadewasser-, Säure-, Alkali-, Überfärbe-, Schweiß-, Abgas-, Bügel-, Plissier-, Dekatier-, Trockenreinigungs- und Reibechtheiten, auszeichnen. Die Lichtechtheiten der erhaltenen Färbungen und Drucke sowohl in trockenem als auch in mit Trinkwasser oder in mit einer sauren oder alkalischen Schweißlösung feuchten Zustand sind sehr gut. Nicht fixierte Farbstoffanteile lassen sich gut auswaschen. Im Druck auf Cellulosefasermaterialien erhält man scharfe Konturen mit einem klaren Weißfond. Drucke und Färbungen flecken in nicht fixiertem Zustand beim Ablegen nicht ab bzw. bluten nicht aus.

Insbesondere eignen sich die erfindungsgemäßen Verbindungen (1) jedoch für den Ätz- und Reservedruck. Ihre Verwendbarkeit in diesen beiden technisch bedeutenden Anwendungsverfahren beruht darauf, daß Färbungen dieser neuen Verbindungen (1) rein weiß ätzbar sind bzw. daß die neuen Verbindungen (1) Cellulosefasermaterial an den Stellen, an denen es mit einem Reservierungsmittel bedruckt oder imprägniert wurde, auch unter den üblichen Fixierbedingungen für faserreaktive Farbstoffe, d. h. in Gegenwart von alkalisch wirkenden Mitteln und höheren Temperaturen nicht anfärben, so daß die erfindungsgemäßen Verbindungen (1) sich problemlos für die Herstellung von Färbungen eignen, deren Negativmuster durch ein Reservierungsmittel vorgegeben ist.

Die nachfolgenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter. Die in diesen Beispielen formelmäßig beschriebenen Verbindungen sind in Form der freien Säuren angegeben; im allgemeinen werden sie in Form ihrer Alkalimetallsalze, wie Lithium-, Natrium- oder Kaliumsalze, hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, in die Synthese eingesetzt werden.

Die für die erfindungsgemäßen Verbindungen angegebenen Absorptionsmaxima ($\lambda_{max}$) im sichtbaren Bereich wurden anhand derer Alkalimetallsalze in wäßriger Lösung ermittelt. In den Tabellenbeispielen sind die $\lambda_{max}$-Werte bei der Farbtonangabe in Klammern gesetzt; die Wellenlängenangabe bezieht sich auf nm.

Beispiel 1

Eine neutrale Lösung von 68,4 Teilen einer Azoverbindung der Formel

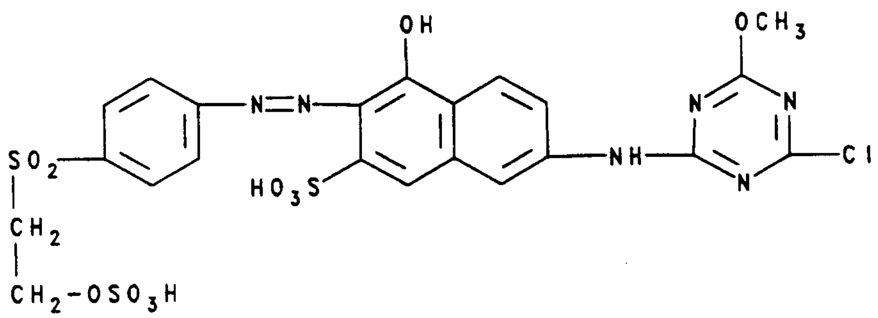

[erhältlich durch Kupplung des Diazoniumsalzes des 4-($\beta$-Sulfatoethylsulfonyl)-anilins mit 3-(2'-Chlor-4'-methoxy-s-triazin-6'-yl)-amino-6-sulfo-8-naphthol] in 900 Teilen Wasser wird mit 31 Teilen 3-($\beta$-Sulfatoethylsulfonyl)-anilin versetzt und mittels kristallinem Natriumacetat auf einen pH-Wert von 4 gestellt. Den Reaktionsansatz erwärmt man auf 60 bis 80 °C und rührt bis zur Beendigung der Umsetzung unter den angebenen Bedingungen weiter. Danach wird der Ansatz mit Kieselgur geklärt, filtriert und sprühgetrocknet.

Man erhält ein elektrolythaltiges (vorwiegend natriumchloridhaltiges) rotes Pulver mit dem Alkalimetallsalz (Natriumsalz) der Verbindung der Formel

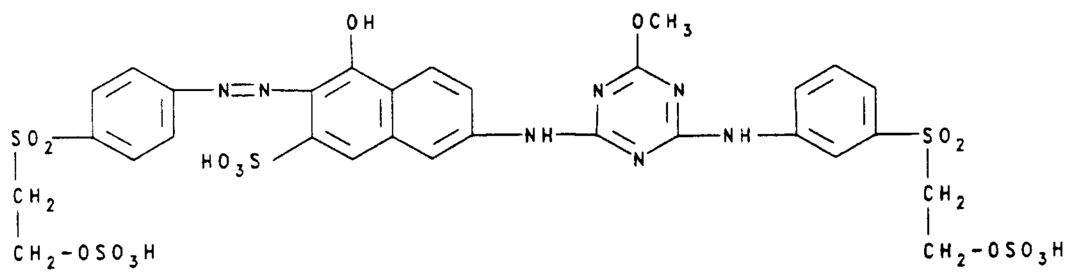

($\lambda_{max}$ = 470 nm).

Diese erfindungsgemäße Azoverbindung liefert nach den üblichen technischen Färbe- und Druckverfahren für faserreaktive Farbstoffe farbstarke, orangerote Färbungen und Drucke mit sehr guten Naßechtheiten in hoher Farbausbeute.

Wegen der sehr guten Ätzbarkeit ist der Farbstoff hervorragend für den Ätzdruck geeignet. Ebenso kann er für den Reservedruck eingesetzt werden, da er an den Stellen des mit einem Reservierungsmittel vorbehandelten (bedruckten oder imprägnierten) Gewebes auf dem Gewebe nicht fixiert und es demgemäß nicht anfärbt. Die nicht fixierten Farbstoffanteile können hierbei sehr leicht ausgewaschen werden.

Beispiel 2

Man versetzt 540 Teile einer wäßrigen Lösung von 41,4 Teilen einer Monochlortriazin-Verbindung, die durch Umsetzung von 2,4-Dichlor-6-methoxy-s-triazin und 3-($\beta$-Sulfatoethylsulfonyl)-1-amino-propan in äquimolaren Mengen erhalten wurde, mit 31,9 Teilen 2-Amino-8-naphthol-6-sulfonsäure. Man führt die Umsetzung unter Rühren bei einem pH-Wert von 4 und einer Temperatur von 60°C durch (das Reaktionsende kann in üblicher Weise dünnschichtchromatographisch unter UV-Licht verfolgt werden). Danach wird der Reaktionsansatz auf 10°C abgekühlt und mit der wäßrigen Suspension des auf üblichem Wege hergestellten Diazoniumsalzes aus 41,1 Teilen 6-($\beta$-Sulfatoethylsulfonyl)-2-amino-naphthalin-1-sulfonsäure versetzt. Die Kupplungsreaktion wird unter Rühren während etwa drei bis vier Stunden bei einem pH-Wert zwischen 4 und 5 und einer Temperatur zwischen 10 und 30°C zu Ende geführt. Die Lösung der erhaltenen erfindungsgemäßen Azoverbindung wird in üblicher Weise geklärt und eingedampft.

Man erhält ein elektrolythaltiges (vorwiegend natriumchloridhaltiges) dunkelbraunes Pulver mit dem Alkalimetallsalz (Natriumsalz) der Verbindung der Formel

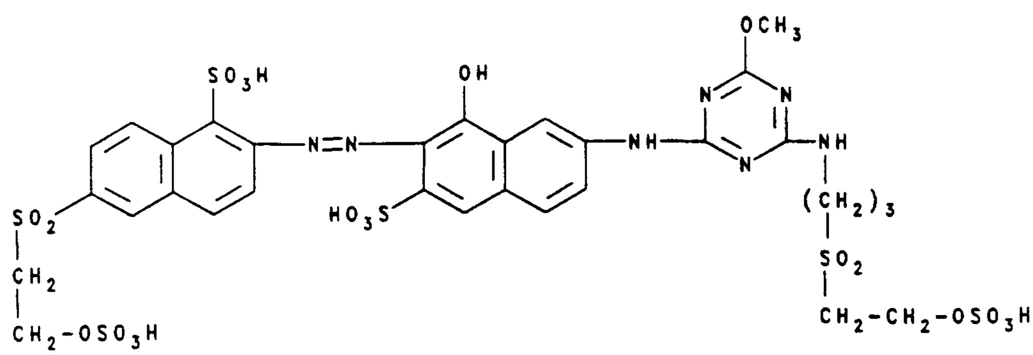

($\lambda_{max}$ = 505 nm).

Die erfindungsgemäße Azoverbindung besitzt sehr gute faserreaktive Farbstoffeigenschaften und liefert auf den in den Beschreibung genannten Materialien, wie Cellulosefasermaterialien und Polyamidfasern, nach den für faserreaktive Farbstoffe üblichen Anwendungs- und Fixierverfahren farbstarke rote Färbungen

und Drucke mit den für die erfindungsgemäße Azoverbindung des Beispiels 1 angegebenen vorteilhaften Anwendungs- und Echtheitsseigenschaften.

Beispiel 3

Man suspendiert 58 Teile des aus äquimolaren Mengen von 3-Amino-8-naphthol-6-sulfonsäure und 2-Chlor-4-methoxy-6-(4'-vinylsulfonyl-phenyl)-amino-s-triazinerhaltenen Umsetzungsproduktes in 1800 Teilen Wasser bei einem pH-Wert zwischen 8 und 9 und gibt bei 10 ° C die wäßrige Suspension des auf üblichem Wege hergestellten Diazoniumsalzes von 34,1 Teilen 2,5-Dimethoxy-4-(β-sulfatoethylsulfonyl)-anilin hinzu. Die Kupplungsreaktion erfolgt bei einem pH-Wert zwischen 4 und 5 und einer Temperatur zwischen 10 und 30 ° C. Die erfindungsgemäß erhaltene Azoverbindung, die, in Form der freien Säure geschrieben, der Formel

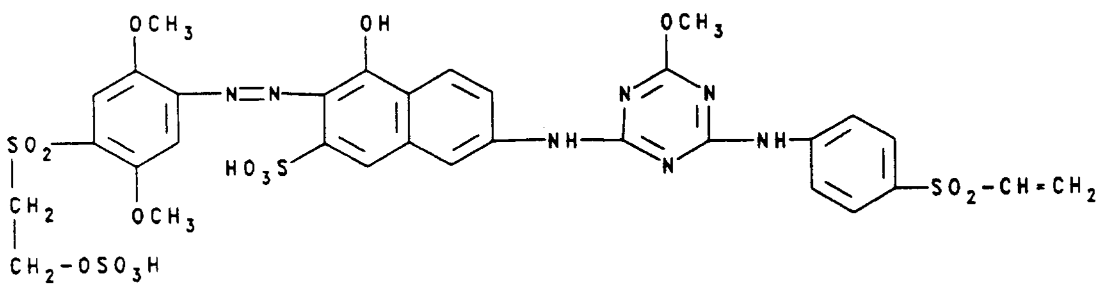

($\lambda_{max}$ = 507 nm)

entspricht, wird in üblicher Weise isoliert. Sie zeigt sehr gute faserreaktive Farbstoffeigenschaften und liefert nach den in der Technik für faserreaktive Farbstoffe üblichen Färbeweisen auf den in Beschreibung genannten Materialien, wie insbesondere Cellulose- und Polyamidfasermaterialien, farbstarke rote Färbungen und Drucke mit guten Echtheitseigenschaften. Der Farbstoff ist sehr leicht ätzbar und eignet sich deswegen sehr gut für den Ätz- und den Reservedruck.

Beispiele 4 bis 44

In den nachfolgenden Tabellenbeispielen sind weitere erfindungsgemäße Verbindungen entsprechend der allgemeinen Formel (1) mit Hilfe der Formelkomponenten beschrieben. Sie lassen sich in erfindungsgemäßer Weise, beispielsweise nach einem der obigen Ausführungsbeispiele, mittels ihrer aus dem jeweiligen Tabellenbeispiel in Verbindung mit der Formel (1) ersichtlichen Komponenten (so der Diazokomponente der allgemeinen Formel (3), dem 2,4-Dichlor-6-alkoxy-s-triazin, der 2- oder 3-Amino-8-naphthol-6-sulfonsäure und dem Amin der allgemeinen Formel (6)) herstellen. Sie besitzen faserreaktive Farbstoffeigenschaften und liefern insbesondere auf Cellulosefasermaterialien nach den für faserreaktive Farbstoffe üblichen Applikations- und Fixiermethoden farbstarke, echte Färbungen und Drucke in dem in dem jeweiligen Tabellenbeispiel für Färbungen auf Baumwolle angegebenen Farbton. Sie eignen sich darüber hinaus insbesondere für den Ätz- und Reservedruck.

| Bsp. | Rest $(X-SO_2)_n$-A- | ...-Stellung von -NH- im 8-Naphtholrest | Rest -O-B | Rest $-N(R)-W-SO_2-X^1$ | Farbton |
|---|---|---|---|---|---|
| 4 | 4-(β-Sulfatoethyl-sulfonyl)-phenyl | 3- | Methoxy | 4-(β-Sulfatoethyl-sulfonyl)-phenylamino | rot (472) |
| 5 | dito | 3- | Methoxy | 2-(β-Sulfatoethyl-sulfonyl)-ethylamino | rot (469) |
| 6 | dito | 3- | Methoxy | 3-(β-Sulfatoethyl-sulfonyl)-propylamino | rot (465) |
| 7 | dito | 3- | Ethoxy | 4-(β-Sulfatoethyl-sulfonyl)-phenylamino | rot |
| 8 | dito | 2- | Ethoxy | dito | rot (482) |
| 9 | dito | 2- | Methoxy | dito | rot (486) |
| 10 | dito | 2- | Methoxy | 3-(β-Sulfatoethyl-sulfonyl)-phenylamino | rot |

| Bsp. | Rest $(X-SO_2)_n$-A- | ...-Stellung von -NH- im 8-Naphtholrest | Rest -O-B | Rest -N(R)-W-$SO_2$-$X^1$ | Farbton |
|---|---|---|---|---|---|
| 11 | dito | 2- | Methoxy | 2-(β-Sulfatoethyl-sulfonyl)-ethylamino | rot (478) |
| 12 | dito | 2- | Methoxy | 3-(β-Sulfatoethyl-sulfonyl)-propylamino | rot (478) |
| 13 | 3-(β-Sulfatoethyl-sulfonyl)-phenyl | 3- | Methoxy | 4-(β-Sulfatoethyl-sulfonyl)-phenylamino | rot |
| 14 | dito | 3- | Methoxy | N-Methyl-4-(β-sulfato-ethylsulfonyl)-phenyl-amino | rot |
| 15 | dito | 3- | Ethoxy | 3-(β-Sulfatoethyl-sulfonyl)-phenylamino | rot |
| 16 | dito | 2- | Methoxy | 4-(β-Sulfatoethyl-sulfonyl)-phenylamino | rot (480) |
| 17 | dito | 2- | Methoxy | 3-(β-Sulfatoethyl-sulfonyl)-phenylamino | rot |

| Bsp. | Rest $(X-SO_2)_n-A-$ | ...-Stellung von -NH- im 8-Naphtholrest | Rest -O-B | Rest $-N(R)-W-SO_2-X^1$ | Farbton |
|---|---|---|---|---|---|
| 18 | 3-(β-Sulfatoethyl-sulfonyl)-phenyl | 2- | Methoxy | 2-(β-Sulfatoethyl-sulfonyl)-ethylamino | rot |
| 19 | dito | 2- | Methoxy | 3-(β-Sulfatoethyl-sulfonyl)-propylamino | rot |
| 20 | dito | 2- | Methoxy | N-Methyl-3-(β-sulfato-ethylsulfonyl)-phenylamino | rot |
| 21 | 2-Methoxy-5-(β-sulfato-ethylsulfonyl)-phenyl | 2- | Methoxy | dito | rot |
| 22 | dito | 3- | Methoxy | 4-(β-Sulfatoethyl-sulfonyl)-phenylamino | rot |
| 23 | 2-Methoxy-5-methyl-4-(β-sulfatoethylsulfonyl)-phenyl | 3- | Methoxy | dito | rot (495) |

| Bsp. | Rest $(X\text{-}SO_2)_n$-A- | ...-Stellung von -NH- im 8-Naphtholrest | Rest -O-B | Rest -N(R)-W-$SO_2$-$X^1$ | Farbton |
|---|---|---|---|---|---|
| 24 | dito | 2- | Methoxy | dito | rot (511) |
| 25 | 2,5-Dimethoxy-4-(β-sulfatoethylsulfonyl)-phenyl | 2- | Methoxy | 4-(β-Sulfatoethyl-sulfonyl)-phenylamino | rot (515) |
| 26 | dito | 3- | Methoxy | dito | rot |
| 27 | 6-(β-Sulfatoethylsulfonyl)-naphth-2-yl | 3- | Methoxy | dito | rot (484) |
| 28 | dito | 2- | Methoxy | dito | rot (503) |
| 29 | dito | 2- | Methoxy | 3-(β-Sulfatoethyl-sulfonyl)-propylamino | rot (495) |
| 30 | dito | 3- | Methoxy | dito | rot |

| Bsp. | Rest $(X-SO_2)_n$-A- | ...-Stellung von -NH- im 8-Naphtholrest | Rest -O-B | Rest $-N(R)-W-SO_2-X^1$ | Farbton |
|---|---|---|---|---|---|
| 31 | 1-Sulfo-6-(β-sulfatoethyl-sulfonyl)-naphth-2-yl | 3- | Methoxy | 3-(β-Sulfatoethylsulfonyl)-phenylamino | rot (476) |
| 32 | dito | 2- | Methoxy | dito | rot (500) |
| 33 | 6-Sulfo-8-(β-sulfatoethyl-sulfonyl)-naphth-2-yl | 2- | Methoxy | 3-(β-Sulfatoethylsulfonyl)-phenylamino | rot (498) |
| 34 | dito | 3- | Methoxy | dito | rot |
| 35 | 1-Sulfo-5-(β-sulfatoethyl-sulfonyl)-naphth-2-yl | 3- | Methoxy | dito | rot (480) |
| 36 | dito | 2- | Methoxy | dito | rot |
| 37 | 8-Sulfo-6-(β-sulfatoethyl-sulfonyl)-naphth-2-yl | 2- | Methoxy | dito | rot (502) |

| Bsp. | Rest $(X\text{-}SO_2)_n\text{-}A\text{-}$ | ...-Stellung von -NH- im 8-Naphtholrest | Rest -O-B | Rest $\text{-}N(R)\text{-}W\text{-}SO_2\text{-}X'$ | Farbton |
|---|---|---|---|---|---|
| 38 | dito | 3- | Methoxy | dito | rot (486) |
| 39 | 4-(β-Sulfatoethylsulfonyl)-phenyl | 3- | Ethoxy | 2-(Vinylsulfonyl)-ethylamino | rot |
| 40 | dito | 3- | Ethoxy | 3-(Vinylsulfonyl)-propylamino | rot |
| 41 | 3,4-Bis-(β-sulfatoethyl-sulfonyl)-phenyl | 3- | Methoxy | 3-(Vinylsulfonyl)-propylamino | rot (478) |
| 42 | dito | 2- | Methoxy | 4-(β-Sulfatoethyl-sulfonyl)-phenylamino | rot |
| 43 | 3,5-Bis-(β-sulfatoethyl-sulfonyl)-phenyl | 2- | Methoxy | dito | rot |
| 44 | dito | 3- | Methoxy | dito | rot |

## Patentansprüche

1. Monoazoverbindung entsprechend der allgemeinen Formel (1)

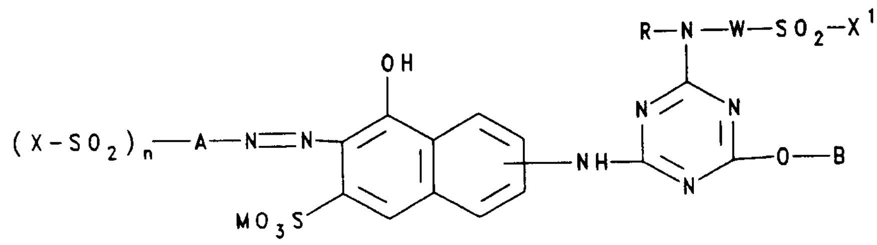

(1)

in welcher bedeuten:

- A ist Phenylen, das durch 1 oder 2 Substituenten substituiert sein kann, oder ist Naphthylen, das durch ein Sulfo substituiert sein kann;
- X ist Vinyl oder ist Ethyl, das durch einen Substituenten substituiert ist, der durch Alkali unter Bildung der Vinylgruppe eliminierbar ist;
- n ist die Zahl 1 oder 2, bevorzugt 1;
- M ist Wasserstoff oder ein Alkalimetall;
- R ist Wasserstoff oder Alkyl von 1 bis 4 C-Atomen, bevorzugt Wasserstoff;
- W ist Phenylen oder Alkylen von 2 bis 4 C-Atomen;
- $X^1$ ist Vinyl oder ist Ethyl, das durch einen Substituenten substituiert ist, der durch Alkali unter Bildung der Vinylgruppe eliminierbar ist;
- B ist Alkyl von 1 bis 4 C-Atomen;

die Triazinylaminogruppe ist in 2- oder 3-Stellung an den 6-Sulfo-8-naphthol-Rest gebunden.

**2.** Verbindung nach Anspruch 1, dadurch gekennzeichnet, daß A ein Rest der allgemeinen Formel (2a) oder (2b)

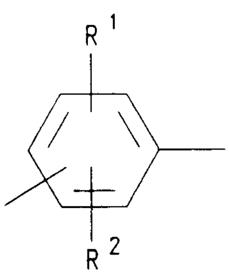

(2a)

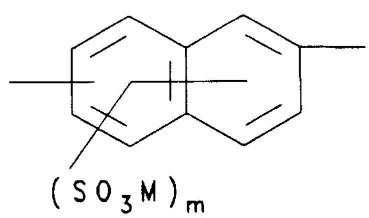

(2b)

ist, in welchen

- $R^1$ Wasserstoff, Alkyl von 1 bis 4 C-Atomen, Alkoxy von 1 bis 4 C-Atomen, Carboxy, Chlor oder Sulfo ist,
- $R^2$ Wasserstoff, Alkyl von 1 bis 4 C-Atomen, Alkoxy von 1 bis 4 C-Atomen oder Chlor ist und
- m für die Zahl Null oder 1 steht (wobei im Falle von m gleich Null diese Gruppierung ein Wasserstoffatom bedeutet).

**3.** Verbindung nach Anspruch 2, dadurch gekennzeichnet, daß A ein meta- oder para-Phenylenrest der Formel (2a) ist, in welcher $R^1$ Wasserstoff oder Methoxy und $R^2$ Wasserstoff oder Methoxy bedeuten.

**4.** Verbindung nach mindestens einem der Ansprüche 1 bis 3, dadurch gekennzeichnet, daß X $\beta$-Sulfatoethyl ist.

**5.** Verbindung nach mindestens einem der Ansprüche 1 bis 4, dadurch gekennzeichnet, daß $X^1$ Vinyl, $\beta$-Chlorethyl oder $\beta$-Sulfatoethyl ist.

**6.** Verbindung nach mindestens einem der Ansprüche 1 bis 5, dadurch gekennzeichnet, daß B Methyl ist.

7. Verbindung nach mindestens einem der Ansprüche 1 bis 6, dadurch gekennzeichnet, daß W 1,3-Phenylen, 1,4-Phenylen, 1,2-Ethylen oder 1,3-Propylen ist.

8. Verfahren zur Herstellung einer Azoverbindung der allgemeinen Formel (1) von Anspruch 1, dadurch gekennzeichnet, daß man eine Diazoniumsalzverbindung eines aromatischen Amins der allgemeinen Formel (3)

$(X - SO_2)_n - A - NH_2$ (3)

in welcher X, n und A eine der in Anspruch 1 genannten Bedeutungen haben, mit einer Verbindung der allgemeinen Formel (4)

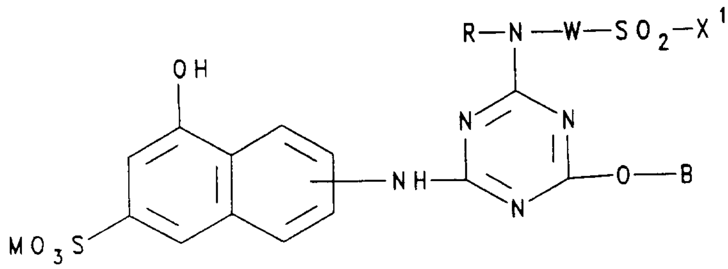

(4)

in welcher M, B, R, W und $X^1$ die der in Anspruch 1 genannten Bedeutungen haben und die Triazinylaminogruppe in 2- oder 3-Stellung an den 8-Naphthol-Rest gebunden ist, kuppelt,
oder daß man eine Verbindung der allgemeinen Formel (5)

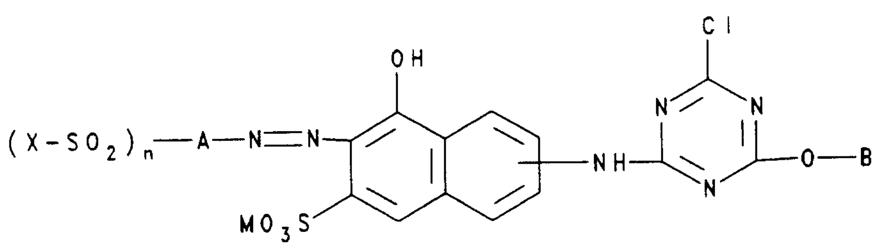

(5)

in welcher X, n, A, M und B eine der in Anspruch 1 genannten Bedeutungen haben und die Triazinylaminogruppe in 2- oder 3-Stellung an den 8-Naphthol-Rest gebunden ist, mit einer Aminoverbindung der allgemeinen Formel (6)

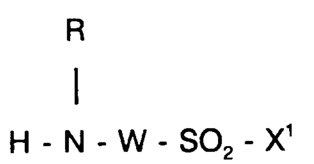

(6)

in welcher R, W und $X^1$ eine der in Anspruch 1 genannten Bedeutungen haben, umsetzt.

9. Verwendung einer Monoazoverbindung von Anspruch 1 zum Färben (einschließlich Bedrucken) von hydroxy- und/oder carbonamidgruppenhaltigem Material, insbesondere Fasermaterial.

10. Verfahren zum Färben (einschließlich Bedrucken) von hydroxy- und/oder carbonamidgruppenhaltigem Material, vorzugsweise Fasermaterial, bei welchem man einen Farbstoff auf das Material aufbringt oder in das Material einbringt und den Farbstoff mittels Wärme oder mit Hilfe eines alkalisch wirkenden Mittels oder durch beide Maßnahmen auf bzw. in dem Material fixiert, dadurch gekennzeichnet, daß der Farbstoff eine Monoazoverbindung von Anspruch 1 ist.

**Patentansprüche für folgenden Vertragsstaat : ES**

1. Verfahren zur Herstellung einer Monoazoverbindung entsprechend der allgemeinen Formel (1)

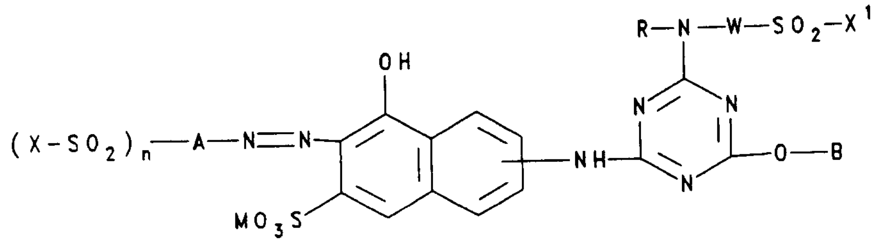

(1)

in welcher bedeuten:

- A ist Phenylen, das durch 1 oder 2 Substituenten substituiert sein kann, oder ist Naphthylen, das durch ein Sulfo substituiert sein kann;
- X ist Vinyl oder ist Ethyl, das durch einen Substituenten substituiert ist, der durch Alkali unter Bildung der Vinylgruppe eliminierbar ist;
- n ist die Zahl 1 oder 2, bevorzugt 1;
- M ist Wasserstoff oder ein Alkalimetall;
- R ist Wasserstoff oder Alkyl von 1 bis 4 C-Atomen, bevorzugt Wasserstoff;
- W ist Phenylen oder Alkylen von 2 bis 4 C-Atomen;
- $X^1$ ist Vinyl oder ist Ethyl, das durch einen Substituenten substituiert ist, der durch Alkali unter Bildung der Vinylgruppe eliminierbar ist;
- B ist Alkyl von 1 bis 4 C-Atomen;

die Triazinylaminogruppe ist in 2- oder 3-Stellung an den 6-Sulfo-8-naphthol Rest gebunden;
dadurch gekennzeichnet, daß man eine Diazoniumsalzverbindung eines aromatischen Amins der allgemeinen Formel (3)

$(X - SO_2)_n - A - NH_2$ (3)

in welcher X, n und A eine der oben genannten Bedeutungen haben, mit einer Verbindung der allgemeinen Formel (4)

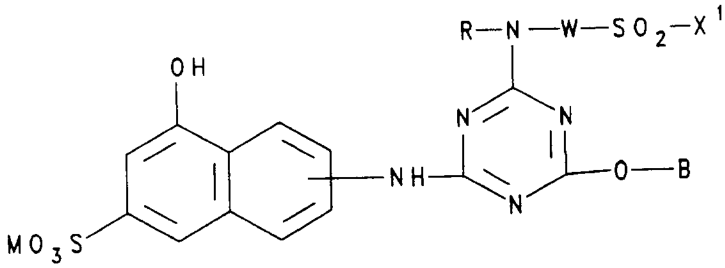

(4)

in welcher M, B, R, W und $X^1$ eine der oben genannten Bedeutungen haben und die Triazinylaminogruppe in 2- oder 3-Stellung an den 8-Naphthol-Rest gebunden ist, kuppelt,
oder daß man eine Verbindung der allgemeinen Formel (5)

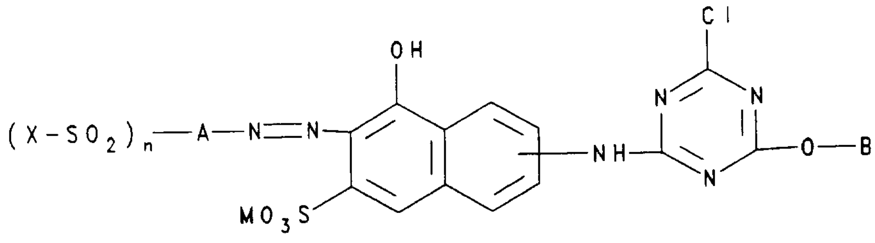

(5)

in welcher X, n, A, M und B eine der oben genannten Bedeutungen haben und die Triazinylaminogruppe in 2- oder 3-Stellung an den 8-Naphthol-Rest gebunden ist, mit einer Aminoverbindung der allgemeinen Formel (6)

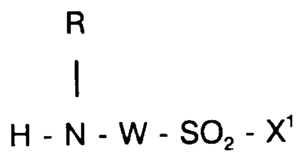

(6)

in welcher R, W und $X^1$ eine der oben genannten Bedeutungen haben, umsetzt.

**2.** Verfahren nach Anspruch 1, dadurch gekennzeichnet, daß A ein Rest der allgemeinen Formel (2a) oder (2b)

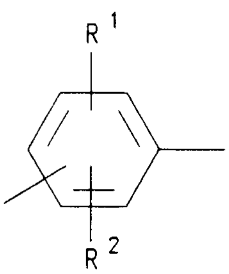

(2a)

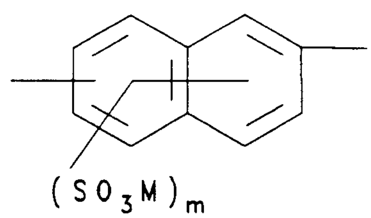

(2b)

ist, in welchen

- $R^1$ Wasserstoff, Alkyl von 1 bis 4 C-Atomen, Alkoxy von 1 bis 4 C-Atomen, Carboxy, Chlor oder Sulfo ist,
- $R^2$ Wasserstoff, Alkyl von 1 bis 4 C-Atomen, Alkoxy von 1 bis 4 C-Atomen oder Chlor ist und
- m für die Zahl Null oder 1 steht (wobei im Falle von m gleich Null diese Gruppierung ein Wasserstoffatom bedeutet).

**3.** Verfahren nach Anspruch 2, dadurch gekennzeichnet, daß A ein meta- oder para-Phenylenrest der Formel (2a) ist, in welcher $R^1$ Wasserstoff oder Methoxy und $R^2$ Wasserstoff oder Methoxy bedeuten.

**4.** Verfahren nach mindestens einem der Ansprüche 1 bis 3, dadurch gekennzeichnet, daß X $\beta$-Sulfatoethyl ist.

**5.** Verfahren nach mindestens einem der Ansprüche 1 bis 4, dadurch gekennzeichnet, daß $X^1$ Vinyl, $\beta$-Chlorethyl oder $\beta$-Sulfatoethyl ist.

6. Verfahren nach mindestens einem der Ansprüche 1 bis 5, dadurch gekennzeichnet, daß B Methyl ist.

7. Verfahren nach mindestens einem der Ansprüche 1 bis 6, dadurch gekennzeichnet, daß W 1,3-Phenylen, 1,4-Phenylen, 1,2-Ethylen oder 1,3-Propylen ist.

8. Verwendung einer Monoazoverbindung von Anspruch 1 zum Färben (einschließlich Bedrucken) von hydroxy- und/oder carbonamidgruppenhaltigem Material, insbesondere Fasermaterial.

9. Verfahren zum Färben (einschließlich Bedrucken) von hydroxy- und/oder carbonamidgruppenhaltigem Material, vorzugsweise Fasermaterial, bei welchem man einen Farbstoff auf das Material aufbringt oder in das Material einbringt und den Farbstoff mittels Wärme oder mit Hilfe eines alkalisch wirkenden Mittels oder durch beide Maßnahmen auf bzw. in dem Material fixiert, dadurch gekennzeichnet, daß der Farbstoff eine Monoazoverbindung von Anspruch 1 oder eine nach Anspruch 1 hergestellte Monoazovebindung ist.

Europäisches Patentamt

# EUROPÄISCHER RECHERCHENBERICHT

Nummer der Anmeldung

EP 92 11 6116

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | CHEMICAL ABSTRACTS, vol. 115, no. 8, 26. August 1991, Columbus, Ohio, US; abstract no. 73621f, M.MIKI ET AL. 'monoazo compounds and dyeing and printing fiber materials with the same' Seite 103 ; * Zusammenfassung * & JP-A-03 072 572 (SUMITOMO CHEMICAL COMPANY, LTD.) | 1-10 | C09B62/51 |
| A | CHEMICAL ABSTRACTS, vol. 85, no. 14, 4. Oktober 1976, Columbus, Ohio, US; abstract no. 95796f, T.IKEDA ET AL 'reactive azo dyes' Seite 83 ; * Zusammenfassung * & JP-A-50 031 566 (SUMITOMO CHEMICAL COMPANY, LTD.) | 1-10 | |
| | | | **RECHERCHIERTE SACHGEBIETE (Int. Cl.5 )** |
| | | | C09B |

Der vorliegende Recherchenbericht wurde für alle Patentansprüche erstellt

| Recherchenort | Abschlußdatum der Recherche | Prüfer |
|---|---|---|
| DEN HAAG | 15 JANUAR 1993 | GINOUX C.R. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)